# EUROPÄISCHE PATENTANMELDUNG

(11) **EP 3 932 604 A1**
(43) Veröffentlichungstag der Anmeldung: **05.01.2022**
(21) Anmeldenummer: 21020362.6
(22) Anmeldetag: 13.08.2018
(51) Int. Cl.: B23K 9/04, B23K 9/23, B23K 15/00, B23K 26/00, B23K 26/342, B23K 101/06

(54) **VERFAHREN ZUR HERSTELLUNG EINES ROHRFORMSTÜCKS IN FORM EINES REDUZIERSTÜCK, EINES ROHRBOGEN ODER EINER ABZWEIGUNG, INSBESONDERE DURCH AUFTRAGSCHWEISSEN**

(30) Priorität: 16.08.2017 DE 102017007734
(62) Teilanmeldung aus: 18756150.1
(71) Anmelder: Linde GmbH, 82049 Pullach (DE)
(72) Erfinder: Wimmer, Georg, Tüßling (DE)
(74) Vertreter: Meilinger, Claudia Sabine

(57) **Zusammenfassung**

Die Erfindung betrifft ein Verfahren zur Herstellung eines als ein Reduzierstück, ein Rohrbogen oder eine Abzweigung ausgebildet Rohrformstücks (10) wobei ein metallischer Werkstoff (11) durch Erwärmen geschmolzen wird, und wobei aus dem geschmolzenen Werkstoff (11) nacheinander eine Mehrzahl an Werkstoffschichten (12) erzeugt wird, wobei die jeweils erzeugte Werkstoffschicht (12) mit der jeweils vorhergehenden Werkstoffschicht (12) stoffschlüssig verbunden wird, und wobei das Rohrformstück (10) aus den miteinander verbundenen Werkstoffschichten (12) gebildet wird. Die Erzeugung des Rohrformstücks (10) erfolgt durch Auftragschweißen, z.B. Lichtbogenschweißen oder Strahlschweißen.

## Beschreibung

Die Erfindung betrifft ein Verfahren zur Herstellung eines Rohrformstücks, z.B. für Rohrleitungen und Druckbehälter, insbesondere durch additive Fertigung mit einem Auftragsschweißverfahren.

Rohrformstücke für Medium führende Rohrleitungen und Druckbehälter mit oder ohne Innendruckbelastung z.B. aus den Werkstoffen Aluminium, un- niedrig und hochlegiertem Stahl, Nickelverbindungen, Titan oder weiteren Nichteisenmetallen und Nichteisenmetalllegierungen werden nach dem Stand der Technik durch Schmieden, Gießen, Bördeln aus einem Rohr oder Zusammenschweißen einzelner Segmente hergestellt.

Der Herstellung dieser Formstücke sind je nach Werkstoff und Anforderung an die Bauteilgeometrie Grenzen gesetzt. Die Geometrie folgt in vielen Fällen den Restriktionen des Herstellungsverfahrens und nicht den Anforderungen hinsichtlich Strömungsverhalten und Kraftfluss bei Innendruckbelastung.

In vielen Fällen ist die Herstellung von Formstücken mit den Methoden des Standes der Technik aufwändig oder sehr schwierig. Dies ist z.B. bei Formstücken aus Aluminium, insbesondere aus Aluminiumlegierungen mit mehr als 2,5 % Magnesiumanteil, der Fall. Beispielsweise ist die Ausschussrate bei der Herstellung von konischen Formstücken aus der Aluminiumlegierung 5083 aufgrund der Rissempfindlichkeit bei starker Verformung sehr hoch.

Daher ist es die Aufgabe der vorliegenden Erfindung, ein Verfahren zur Verfügung zu stellen, welches im Hinblick auf die genannten Nachteile des Standes der Technik verbessert ist.

Diese Aufgabe wird durch das Verfahren nach Anspruch 1 gelöst. Vorteilhafte Ausführungsformen des Verfahrens sind in den Unteransprüchen 2 bis 9 angegeben. Diese werden im Folgenden beschrieben.

Die Erfindung betrifft ein Verfahren zur Herstellung eines Rohrformstücks, wobei ein metallischer Werkstoff durch Erwärmen geschmolzen wird, und wobei aus dem geschmolzenen Werkstoff nacheinander eine Mehrzahl an Werkstoffschichten erzeugt wird, wobei die jeweils erzeugte Werkstoffschicht mit der jeweils vorhergehenden Werkstoffschicht stoffschlüssig verbunden wird, und wobei das Rohrformstück aus den miteinander verbundenen Werkstoffschichten gebildet wird.

Insbesondere handelt es sich bei dem erfindungsgemäßen Verfahren um ein additives Fertigungsverfahren. Dabei wird insbesondere der metallische Werkstoff mittels Auftragschweißen (auch als Cladding bezeichnet) auf das Werkstück (also das unfertige Rohrformstück während der Fertigung) aufgebracht, und somit das Rohrformstück gebildet. Das Auftragsschweißen kann z.B. mittels Lichtbogenschweißen oder Strahlschweißen, insbesondere Laserstrahlschweißen oder Elektronenstrahlschweißen, durchgeführt werden.

Beim Lichtbogenschweißen wird zwischen einer Schweißelektrode und einer Gegenelektrode ein Lichtbogen (also eine elektrische Entladung) erzeugt, welcher Wärme freisetzt, aufgrund welcher das zu schweißende Werkstück an der Position des Lichtbogens schmilzt. Als Gegenelektrode wird häufig das Werkstück verwendet. Das Lichtbogenschweißen kann unter einer Schutzgasatmosphäre durchgeführt werden, um eine Oxidation des Werkstücks durch den Lichtbogen zu vermeiden.

Beim Strahlschweißen wird ein Laser- oder Elektronenstrahl auf das Werkstück gerichtet und dieses somit lokal erwärmt, so dass das Werkstück an der entsprechenden Position aufschmilzt.

Unter dem Begriff "Rohrformstück" ist im Kontext dieser Erfindung ein zumindest abschnittsweise rohrförmiges Teil eines Rohres zum Führen von fluiden Medien im Rohrinnenraum oder eines Druckbehälters zum Aufnehmen eines fluiden Mediums zu verstehen. Dabei bedeutet der Begriff "rohrförmig", dass der entsprechende Abschnitt entlang einer Längsachse hohlzylinderförmig ausgebildet ist, wobei insbesondere der Abschnitt senkrecht zu der Längsachse einen im Wesentlichen kreisförmigen oder elliptischen Querschnitt aufweist. Der Innenraum des Rohres ist dabei dazu ausgebildet ein fluides (also flüssiges oder gasförmiges) Medium zu führen. Rohrformstücke können insbesondere Reduzierungen, Rohrbögen, Abzweigungen, T-Stücke, Y-Stücke (auch als Hosenstücke bezeichnet), Muffen, U-Rohre (auch als Siphons bezeichnet) und Rohrstutzen sein. In der Haustechnik werden solche Formstücke auch als "Fittings" bezeichnet.

Weiterhin ist unter einem "metallischen Werkstoff im Zusammenhang dieser Erfindung ein Werkstoff zu verstehen, das aus einem Metall, also einem Element gebildet ist, das sich im periodischen System der Elemente unterhalb einer Trennungslinie von Bor bis Astat befindet, sowie Werkstoffe aus Legierungen oder intermetallischen Phasen solcher Metalle. Solche metallischen Werkstoffe haben in fester oder flüssiger Form die charakteristischen Eigenschaften hohe elektrische Leitfähigkeit, hohe Wärmeleitfähigkeit, Duktilität (Verformbarkeit) und metallischer Glanz (Spiegelglanz).

Der Begriff "Schmelzen" bedeutet im Kontext der vorliegenden Erfindung, dass der Werkstoff durch das Erwärmen ausreichend fließfähig gemacht wird, dass der Werkstoff eine Werkstoffschicht bilden kann und mit der jeweils vorhergehenden Werkstoffschicht stoffschlüssig verbunden werden kann.

Die jeweils erzeugte Werkstoffschicht wird mit der jeweils vorhergehenden Werkstoffschicht stoffschlüssig verbunden. Dabei versteht es sich, dass zu Beginn des erfindungsgemäßen Verfahrens zunächst eine erste Werkstoffschicht gebildet wird, mit der anschließend eine zweite Werkstoffschicht stoffschlüssig verbunden wird. Die erste Werkstoffschicht kann z.B. auf einer Unterlage gebildet werden, wobei die Unterlage aus einem Material besteht, dass sich unter den Bedingungen des Verfahrens nicht mit dem Werkstoff verbindet, so dass sich das fertige Rohrformstück nach Beendigung des Verfahrens von der Unterlage ablösen lässt.

Das erfindungsgemäße Herstellungsverfahren bietet im Gegensatz zu den Verfahren des Standes der Technik die Möglichkeit, die genannten Rohrformstücke hinsichtlich der Strömungseigenschaften des im Rohr fließenden Mediums und des Kraftflusses bei Innendruckbelastung des Rohres bzw. Druckbehälters zu optimieren. Dies ist insbesondere bei Verwendung von Aluminium-Magnesium-Legierungen mit Magnesiumgehalt über 2,5 % Gewichtsanteil als Werkstoff der Fall, da Rohrformstücke aus solchen Materialien mit den Methoden des Standes der Technik nur schwierig zu fertigen sind.

Weiterhin ergeben sich mit dem erfindungsgemäßen Verfahren verbesserte Möglichkeiten der Werkstoffwahl bei geforderten Geometrien, z.B. so dass auch Aluminium-Magnesium-Legierungen mit Magnesiumgehalt über 2,5 % Gewichtsanteil ohne größere Fertigungsprobleme als Werkstoff verwendet werden können.

Zudem können die genannten Rohrformstücke mit dem Verfahren nach der vorliegenden Erfindung im Vergleich zum Stand der Technik kostengünstiger hergestellt werden.

Gemäß einer Ausführungsform wird eine elektrische Spannung zwischen einer Schweißelektrode und einer Gegenelektrode zur Verfügung gestellt bzw. angelegt, so dass ein Lichtbogen zwischen der Schweißelektrode und der Gegenelektrode gebildet wird, wobei der Werkstoff mittels der durch den Lichtbogen erzeugten Wärme geschmolzen wird, und wobei mittels der durch den Lichtbogen erzeugten Wärme die jeweils erzeugte Werkstoffschicht mit der jeweils vorhergehenden Werkstoffschicht stoffschlüssig verbunden wird. In diesem Fall wird also ein Lichtbogenschweißverfahren verwendet.

Gemäß einer weiteren Ausführungsform ist die Schweißelektrode aus dem Werkstoff gebildet, wobei zumindest ein Elektrodenabschnitt der Schweißelektrode mittels der durch den Lichtbogen erzeugten Wärme geschmolzen wird, und wobei aus dem geschmolzenen Elektrodenabschnitt der Schweißelektrode die Mehrzahl an Werkstoffschichten gebildet wird.

Die Schweißelektrode ist dabei insbesondere aus einem Draht des Werkstoffs gebildet. Insbesondere schmilzt dabei das Ende des Drahtes, an dem sich bei Anlegen einer Spannung der Lichtbogen bildet, ab und bildet einen Tropfen flüssigen Werkstoffs, wobei der Tropfen als Teil der während des jeweiligen Verfahrensschrittes gebildeten Werkstoffschicht an eine entsprechende Position des Werkstücks gebracht wird. An dieser Position verbindet sich der Tropfen dabei stoffschlüssig mit der ebenfalls durch den Lichtbogen lokal geschmolzenen darunterliegenden Werkstoffschicht und erkaltet schließlich. Während des kontinuierlichen Abschmelzens des Drahtendes kann der Draht von der dem Ende entgegengesetzten Seite nachgefördert werden, so dass der Abstand zwischen der Schweißelektrode und dem Werkstück während des Verfahrens konstant bleibt. Selbstverständlich kann die Schweißelektrode bzw. der Draht auch während des Verfahrens ausgetauscht werden (z.B. wenn die Schweißelektrode zu weit abgeschmolzen ist um das Verfahren durchzuführen), so dass das Werkstück nacheinander aus dem Material mehrerer Schweißelektroden bzw. Drähte gebildet wird. Als Gegenelektrode kann hier z.B. das Werkstück (also das unfertige Rohrformstück) oder eine separate Gegenelektrode dienen.

Alternativ zu einer Schweißelektrode aus dem Werkstück kann z.B. auch eine nicht schmelzende Schweißelektrode (z.B. aus Wolfram) verwendet werden. In diesem Fall wird der Werkstoff separat zugeführt, z.B. als Pulver, das auf das Werkstück aufgebracht und dann mittels des Lichtbogens geschmolzen wird.

Gemäß einer weiteren Ausführungsform wird ein Laserstrahl oder Elektronenstrahl zur Verfügung gestellt, wobei der Werkstoff mittels der durch den Laserstrahl oder Elektronenstrahl erzeugten Wärme geschmolzen wird, und wobei mittels der durch den Laserstrahl oder Elektronenstrahl erzeugten Wärme die jeweils erzeugte Werkstoffschicht mit der jeweils vorhergehenden Werkstoffschicht stoffschlüssig verbunden wird.

Bei der genannten Ausführungsform wird also ein Strahlschweißverfahren verwendet. Auch bei solchen Strahlschweißverfahren kann der Werkstoff in Form eines Drahtes zur Verfügung gestellt werden. In diesem Fall befindet sich ein Drahtabschnitt des Drahtes (z.B. das Ende) im Erwärmungsbereich des Laser- oder Elektronenstrahls, so dass dieser Drahtabschnitt aufgrund der von dem Laser- oder Elektronenstrahl freigesetzten Wärme geschmolzen wird. Dabei kann sich der entsprechende Drahtabschnitt z.B. im Strahlengang des Laser- oder Elektronenstrahls befinden.

Alternativ dazu kann der Werkstoff bei Verwendung eines Strahlschweißverfahrens auch in Form eines Pulvers zur Verfügung gestellt werden, welches auf das Werkstück aufgebracht und mittels des Laser- oder Elektronenstrahls geschmolzen wird.

Gemäß einer weiteren Ausführungsform wird der Werkstoff in Form eines Drahtes zur Verfügung gestellt, wobei zumindest ein Drahtabschnitt, insbesondere ein Ende des Drahtes, durch Erwärmen geschmolzen wird, und wobei aus dem geschmolzenen Drahtabschnitt des Drahtes die Mehrzahl an Werkstoffschichten gebildet wird, wobei insbesondere die Schweißelektrode aus dem Draht gebildet ist.

Gemäß einer weiteren Ausführungsform wird der Werkstoff in Form eines Pulvers zur Verfügung gestellt, wobei das Pulver auf die jeweils vorhergehende Werkstoffschicht aufgebracht wird, und wobei das Pulver durch Erwärmen geschmolzen wird, so dass die jeweilige Werkstoffschicht gebildet wird und mit der jeweils vorhergehenden Werkstoffschicht stoffschlüssig verbunden wird.

Gemäß einer weiteren Ausführungsform ist der Werkstoff aus der Gruppe bestehend aus Aluminium, einer Aluminiumlegierung, Nickel, einer Nickellegierung, Titan, einer Titanlegierung und Stahl ausgewählt.

Gemäß einer weiteren Ausführungsform ist der Werkstoff eine Aluminiumlegierung mit einem Gewichtsanteil von wenigstens 2,5 % Magnesium.

Solche Werkstoffe sind mit den vorliegenden Methoden des Standes der Technik besonders schwierig zu Rohrformstücken zu verarbeiten.

Gemäß einer weiteren Ausführungsform ist das Rohrformstück als ein Reduzierstück, insbesondere ein konisches Reduzierstück, ein Rohrbogen oder eine Abzweigung ausgebildet.

Der Begriff Reduzierstück (auch als Reduzierung bezeichnet) beschreibt dabei ein Rohrformstück, dass entlang seiner Längserstreckungsrichtung zwei Enden mit unterschiedlicher Nennweite aufweist. Solche Reduzierstücke können insbesondere zum Verbinden von Rohren verschiedener Nennweiten bzw. Rohrinnendurchmesser verwendet werden. Der Begriff "konisches Reduzierstück" bezeichnet ein Reduzierstück, welches entlang seiner Längserstreckungsrichtung zwischen seinen Enden einen kegelstumpfförmigen Abschnitt aufweist, wobei sich im Bereich des kegelstumpfförmigen Abschnitts die Nennweite ändert. Insbesondere ist die konische Reduzierung eine konzentrische Reduzierung, das heißt, der besagte Kegelstumpf weist eine kreisförmige Grundfläche auf. Eine konische Reduzierung, bei welcher der Kegelstumpf eine von der Kreisform abweichende Grundfläche aufweist, wird als exzentrische Reduzierung bezeichnet.

Gemäß einer weiteren Ausführungsform ist das Rohrformstück als Reduzierstück ausgebildet, wobei das Verhältnis zwischen den Nennweiten der Enden des Reduzierstücks mindestens 1,1 zu 1, insbesondere 1,5 zu 1 bis 2 zu 1, bevorzugt 1,5 zu 1, beträgt.

Der Begriff "Rohrbogen" bezeichnet im Zusammenhang der vorliegenden Erfindung ein gekrümmtes Rohrformstück, wobei mit einem entsprechenden Rohrformstück insbesondere eine Richtungsänderung einer Rohrleitung realisierbar ist.

Gemäß einer weiteren Ausführungsform ist das Rohrformstück als Rohrbogen ausgebildet, wobei das Rohrformstück, insbesondere entlang einer Rohrerstreckung, eine Krümmung mit einem Krümmungsradius von 2000 cm oder weniger, insbesondere 1000 cm oder weniger, bevorzugt 500 cm oder weniger, aufweist. Dabei bezeichnet der Begriff "Rohrerstreckung" insbesondere die Fließrichtung eines im Rohrinnenraum geführten Fluids.

Im Kontext der Erfindung bedeutet die Bezeichnung "Abzweigung" (auch als Rohrabzweigung bezeichnet) ein Rohrformstück mit einer Gabelung, das dazu ausgebildet ist, den Strom eines in dem Rohrformstück geführten Fluids an der Gabelung zu teilen bzw. zwei Ströme zu einem Strom an der Gabelung zusammenzuführen. Das Rohrformstück weist dabei einen ersten Rohrabschnitt, der entlang einer ersten Längsachse verläuft, und einen zweiten Rohrabschnitt, der entlang einer zweiten Längsachse verläuft, wobei der erste und der zweite Rohrabschnitt an der besagten Gabelung strömungstechnisch verbunden sind. Die Rohrabschnitte bzw. Längsachsen verlaufen unter einem Winkel zueinander, sind also nicht parallel zueinander. Die Rohrabschnitte können z.B. unter einem Winkel von 90 ° zueinander verlaufen. Solche Abzweigungen werden insbesondere als T-Stücke bezeichnet. Alternativ dazu sind natürlich auch stumpfe oder spitze Winkel zwischen den Rohrabschnitten möglich. Die letztgenannten Abzweigungen werden insbesondere auch als Y-Stücke bezeichnet.

Gemäß einer weiteren Ausführungsform weist das Rohrformstück eine Druckfestigkeit von mindestens 10 bar, insbesondere mindestens 100 bar, auf.

Gemäß einer weiteren Ausführungsform weist das Rohrformstück eine Druckfestigkeit von mindestens 10 bar, mindestens 20 bar, mindestens 30 bar, mindestens 40 bar, mindestens 50 bar, mindestens 60 bar, mindestens 70 bar, mindestens 80 bar, mindestens 90 bar oder mindestens 100 bar auf.

Mit dem Begriff "Druckfestigkeit" ist dabei die Eigenschaft des Rohrformstücks gemeint, bei einem entsprechenden Innendruck eines im Rohrinnenraum geführten Fluids formstabil zu bleiben.

Weitere Ausführungsbeispiele der Erfindung werden im Folgenden anhand von Zeichnungen beschrieben. Dabei zeigen
- Fig. 1: ein mit dem erfindungsgemäßen Verfahren hergestelltes konisches Reduzierstück;
- Fig. 2: einen mit dem erfindungsgemäßen Verfahren hergestellten Rohrbogen;
- Fig. 3: eine mit dem erfindungsgemäßen Verfahren hergestellte Abzweigung;
- Fig. 4: eine schematische Darstellung einer ersten Ausführungsform des erfindungsgemäßen Verfahrens mittels Lichtbogenschweißen mit Werkstoffzuführung als Draht;
- Fig. 5: eine schematische Darstellung einer zweiten Ausführungsform des erfindungsgemäßen Verfahrens mittels Lichtbogenschweißen mit Werkstoffzuführung in Pulverform;
- Fig. 6: eine schematische Darstellung einer dritten Ausführungsform des erfindungsgemäßen Verfahrens mittels Strahlschweißen mit Werkstoffzuführung als Draht;
- Fig. 7: eine schematische Darstellung einer vierten Ausführungsform des erfindungsgemäßen Verfahrens mittels Strahlschweißen mit Werkstoffzuführung in Pulverform.

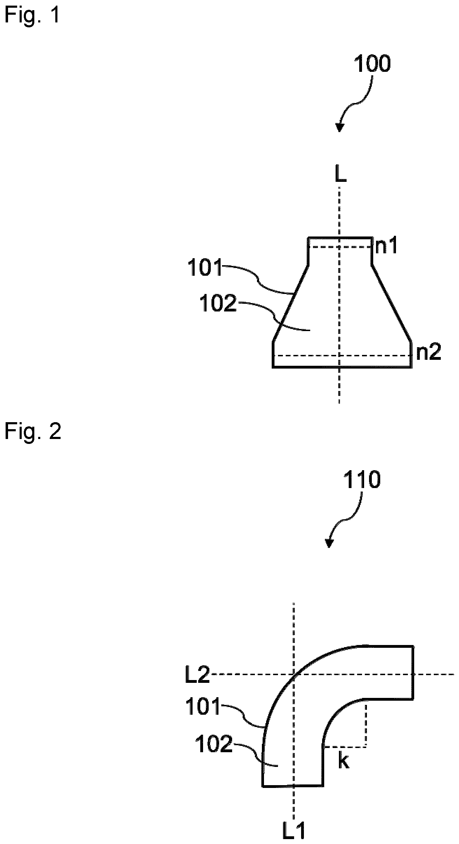

Die Figur 1 zeigt eine schematische Querschnittsdarstellung eines Reduzierstücks 100 aus einem metallischen Werkstoff, das mit dem erfindungsgemäßen Verfahren hergestellt ist. Das Reduzierstück 100 verläuft rohrförmig entlang einer Längsachse L und weist eine Wandung 101 (in Umfangsrichtung bezüglich der Längsachse L) und einen von der Wandung 101 umgebenen Innenraum 102 zur Führung eines fluiden Mediums auf. Insbesondere weist dabei das Reduzierstück 100 senkrecht zu der Längsachse L einen kreisförmigen Querschnitt auf.

Das Reduzierstück 100 weist weiterhin an einem ersten Ende eine erste Nennweite n1 (das heißt eine Erstreckung des Rohrinnenraums 102 senkrecht zu der Längsachse L, insbesondere einen Rohrinnendurchmesser) und an einem zweiten Ende eine zweite Nennweite n2 auf, wobei die zweite Nennweite n2 größer ist als die erste Nennweite n1.

Das Reduzierstück 100 ist konisch ausgebildet, das heißt die Wandung 101 bildet einen Kegelstumpf aus. Die in Fig. 1 gezeigte konische Reduzierung ist eine konzentrische Reduzierung, das heißt, der besagte Kegelstumpf weist eine kreisförmige Grundfläche auf. Alternativ dazu können mit dem erfindungsgemäßen Verfahren auch exzentrische Reduzierstücke 100 hergestellt werden, d.h. konische Reduzierungen, bei denen der Kegelstumpf eine von der Kreisform abweichende Grundfläche aufweist.

Das Reduzierstück 100 kann insbesondere zum Verbinden von Rohren oder Druckbehältern verschiedener Nennweiten bzw. Rohrinnendurchmesser verwendet werden.

Die Figur 2 zeigt eine schematische Schnittdarstellung eines Rohrbogens 110 aus einem metallischen Werkstoff, der mit dem erfindungsgemäßen Verfahren hergestellt ist. Auch der Rohrbogen 110 weist eine Wandung 101 sowie einen von der Wandung 101 umgebenen Innenraum 102 zur Führung eines fluiden Mediums auf.

Der Rohrbogen 110 weist einen gekrümmten Abschnitt mit einem Krümmungsradius k, einen ersten Endabschnitt, der entlang einer ersten Längsachse L1 verläuft, sowie einen zweiten Endabschnitt, der entlang einer zweiten Längsachse L2 verläuft, auf. Im hier gezeigten Beispiel verlaufen die erste Längsachse L1 und die zweite Längsachse L2 senkrecht zueinander. Selbstverständlich sind aber auch von 90° abweichende Winkel zwischen der ersten Längsachse L1 und der zweiten Längsachse L2 denkbar. Dabei kann durch Anschließen zweier Rohrenden bzw. Druckbehälterenden an einen derartigen Rohrbogen 110 insbesondere eine Richtungsänderung einer Rohrleitung oder eines Druckbehälters realisiert werden.

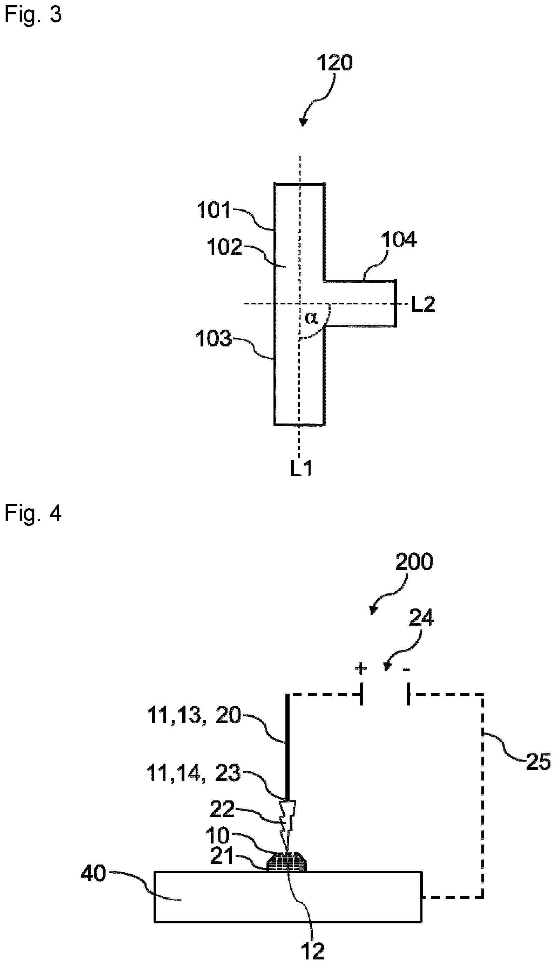

Die Figur 3 zeigt eine schematische Querschnittsdarstellung einer Abzweigung 120 aus einem metallischen Werkstoff, die mit dem erfindungsgemäßen Verfahren hergestellt ist. Die Abzweigung 120 weist ebenfalls eine rohrförmige Wandung 101 auf, die einen Innenraum 102 umgibt, wobei die Abzweigung 120 dazu ausgebildet ist, in dem Innenraum 102 ein Fluid zu führen.

Ferner weist die Abzweigung 120 einen ersten Rohrabschnitt 103 und einen zweiten Rohrabschnitt 104 auf, wobei der erste Rohrabschnitt 103 entlang einer ersten Längsachse L1 verläuft und der zweite Rohrabschnitt 104 entlang einer zweiten Längsachse L2 verläuft. Der erste Rohrabschnitt 103 mündet in den zweiten Rohrabschnitt 104, so dass ein Fluid, das im Innenraum 102 der Abzweigung 120 strömt, sich an der Gabelung zwischen dem ersten Rohrabschnitt 103 und dem zweiten Rohrabschnitt 104 aufteilen kann, bzw. bei umgekehrter Flussrichtung zusammengeführt werden kann. Die Abzweigung 120 kann insbesondere dazu verwendet werden, in einer Rohrleitung oder einem Druckbehälter geführte Fluidströme je nach Flussrichtung aufzuteilen bzw. zusammenzuführen.

Der erste Rohrabschnitt 103 und der zweite Rohrabschnitt 104 verlaufen unter einem Winkel α zueinander. Bei der in Figur 3 dargestellten Abzweigung 120 beträgt der Winkel α 90°. Solche Abzweigungen 120 werden auch als T-Stücke bezeichnet. Natürlich können mit dem erfindungsgemäßen Verfahren auch Abzweigungen 120 mit spitzen oder stumpfen Winkeln α zwischen dem erstem Rohrabschnitt 103 und dem zweiten Rohrabschnitt 104 hergestellt werden. Solche Abzweigungen 120 werden insbesondere auch als Y-Stücke bezeichnet.

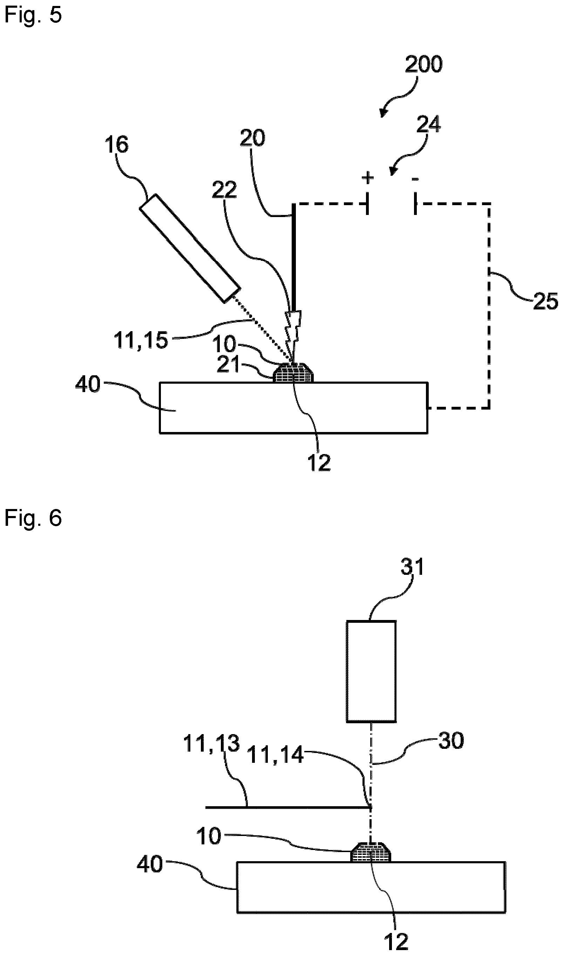

In den Figuren 4 und 5 sind Ausführungsformen des erfindungsgemäßen Verfahrens schematisch dargestellt, bei denen der Werkstoff 11 mittels Lichtbogenschweißen dem Werkstück 10, also dem teilweise fertig gestellten Rohrformstück 10, während des Verfahrens zugeführt wird.

Das Rohrformstück 10, bzw. das Werkstück 10, ist auf einer Unterlage 40 positioniert. Weiterhin zeigen die Figuren 4 und 5 eine Vorrichtung 200 zum Lichtbogenschweißen (z. B. Metallschweißen mit inerten Gasen, MIG, oder Metallaktivgas-Schweißen, MAG) mit einer Schweißelektrode 20, die über eine elektrische Leitung 25 mit einer Spannungsquelle 24 elektrisch leitend verbunden ist. Die Spannungsquelle 24 ist weiterhin über eine elektrische Leitung 25 mit der Unterlage 40 elektrisch leitend verbunden. Das metallische Rohrformstück 10 bzw. das Werkstück 10 kann dabei über die Unterlage 40 und die elektrische Leitung 25 elektrisch leitend mit der Spannungsquelle 24 verbunden sein, so dass das Werkstück 10 als Gegenelektrode 21 fungieren kann. Auf diese Weise kann durch Bereitstellen einer elektrischen Spannung an der Spannungsquelle 24 ein elektrisches Feld zwischen der Schweißelektrode 20 und der Gegenelektrode 21 generiert werden, so dass ein Lichtbogen 22 zwischen der Schweißelektrode 20 und der Gegenelektrode 21 entsteht. Alternativ dazu kann die Vorrichtung 200 zum Lichtbogenschweißen eine separate Gegenelektrode 21 aufweisen, die über die elektrische Leitung 25 mit der Spannungsquelle 24 elektrisch leitend verbunden ist.

Bei der in Figur 4 dargestellten Ausführungsform ist die Schweißelektrode 20 als Draht 13 ausgebildet, wobei der Draht 13 aus dem Werkstoff 11 gebildet ist. Mittels der durch den Lichtbogen 22 generierten Wärme wird ein Drahtabschnitt 14 bzw. Elektrodenabschnitt 13, hier ein Ende des Drahts 13, geschmolzen, wobei der geschmolzene Werkstoff 11 als Werkstoffschicht 12 auf das Werkstück 10 aufgetragen wird. Beim Bilden der jeweiligen Werkstoffschicht 12 (also der jeweils obersten Schicht) werden das Werkstück 10 und die Schweißelektrode 20 insbesondere in Bezug zueinander bewegt, so dass an unterschiedlichen Stellen der Oberfläche des Werkstücks 10 gezielt die besagte Werkstoffschicht 12 aufgetragen wird. Hierbei kann entweder das Werkstück 10 oder die Schweißelektrode 20 bzw. die Vorrichtung 200 bewegt werden.

Der an dem Drahtabschnitt 14 abschmelzende Draht 13 wird insbesondere vom dem Drahtabschnitt 14 gegenüberliegenden Ende des Drahtes 13 nachgefördert, so dass insbesondere die Position des Drahtabschnitts 14 während des Verfahrens konstant bleibt.

In der Figur 5 ist ein analoges erfindungsgemäßes Verfahren schematisch dargestellt, bei dem die Vorrichtung zum Lichtbogenschweißen 200 (z. B. Metallschweißen mit inerten Gasen, MIG, oder Metallaktivgas-Schweißen, MAG) eine Schweißelektrode 20 aufweist, die nicht aus dem Werkstoff 11 gebildet ist sondern insbesondere aus einem nicht schmelzbaren Material (bei den Temperaturen, die durch den Lichtbogen 22 erzeugbar sind), z.B. Wolfram. Der Werkstoff 11, aus dem die Werkstoffschichten 12 des Werkstücks 10 gebildet werden, wird bei dieser Ausführungsform in Form eines Pulvers 15 mittels einer Pulverquelle 16 dem Werkstück 10 zugeführt. Dabei wird das Pulver 15 durch die mittels des Lichtbogens 22 erzeugte Wärme geschmolzen.

In den Figuren 4 und 5 ist die Schweißelektrode 20 jeweils als Anode und die Gegenelektrode 21 jeweils als Kathode dargestellt. Dies entspricht der beim MIG-Schweißen und MAG-Schweißen üblicherweise verwendeten Polarität. Die Polarität der Schweißelektrode 20 und der Gegenelektrode 21 kann jedoch auch umgekehrt sein.

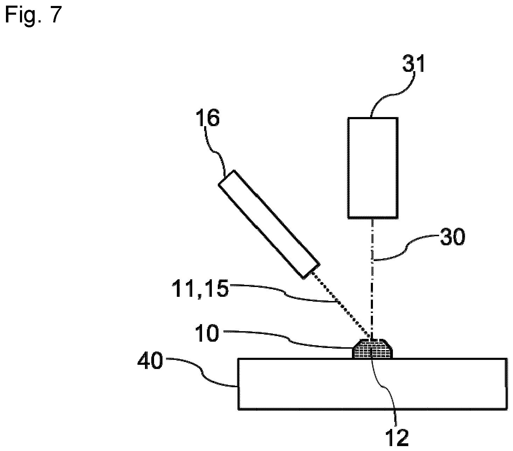

Die Figuren 6 und 7 zeigen schematisch weitere Ausführungsformen des erfindungsgemäßen Verfahrens mittels Strahlschweißen, also zum Beispiel Laserschweißen oder Elektronenstrahlschweißen.

Analog zu den in Figur 4 und 5 gezeigten Ausführungsformen ist hierbei das Rohrformstück 10 beziehungsweise das Werkstück 10 auf eine Unterlage 40 positioniert. Statt der Vorrichtung 200 zum Lichtbogenschweißen ist bei den in Figur 6 und 7 gezeigten Ausführungsformen des Verfahrens eine Laser- oder Elektronenquelle 31 vorgesehen, die einen Laser- oder Elektronenstrahl 30 erzeugt.

Bei der in Figur 6 gezeigten Ausführungsform wird der Werkstoff 11 analog zu dem in Figur 4 gezeigten Verfahren in Form eines Drahtes 13 zur Verfügung gestellt. Dabei wird ein Drahtabschnitt 14, insbesondere ein Ende des Drahtes 13, mittels des Laser- oder Elektronenstrahls 30 geschmolzen, so dass aus dem geschmolzenen Werkstoff 11 die jeweilige Werkstoffschicht 12 des Werkstücks 10 gebildet wird.

Auch bei dieser Ausführungsform wird insbesondere der an dem Drahtabschnitt 14 abschmelzende Draht 13 vom dem Drahtabschnitt 14 gegenüberliegenden Ende des Drahtes 13 nachgefördert, so dass insbesondere die Position des Drahtendes 14 während des Verfahrens konstant bleibt.

Die Figur 7 zeigt eine weitere Ausführungsform des Verfahrens, bei welcher der Werkstoff 11 analog zu der in Figur 5 gezeigten Ausführungsform in Form eines Pulvers 15 mittels einer Pulverquelle 16 dem Werkstück 10 zugeführt wird, wobei das Pulver 15 mittels des Laser- oder Elektronenstrahls 30 geschmolzen wird, so dass aus dem geschmolzenen Werkstoff 11 die jeweilige Werkstoffschicht 12 gebildet wird.

**Bezugszeichenliste**

| | |
|---|---|
| 10 | Rohrformstück, Werkstück |
| 11 | Werkstoff |
| 12 | Werkstoffschicht |
| 13 | Draht |
| 14 | Drahtabschnitt |
| 15 | Pulver |
| 16 | Pulverquelle |
| 20 | Schweißelektrode |
| 21 | Gegenelektrode |
| 22 | Lichtbogen |
| 23 | Elektrodenabschnitt |
| 24 | Spannungsquelle |
| 25 | Elektrische Leitung |
| 30 | Laser- oder Elektronenstrahl |
| 31 | Laser- oder Elektronenquelle |
| 40 | Unterlage |
| 100 | Reduzierstück |
| 101 | Wandung |
| 102 | Innenraum |
| 103 | Erster Rohrabschnitt |
| 104 | Zweiter Rohrabschnitt |
| 110 | Rohrbogen |
| 120 | Abzweigung |
| 200 | Vorrichtung zum Lichtbogenschweißen |
| L | Längsachse |
| L1 | erste Längsachse |
| L2 | zweite Längsachse |
| n1 | erste Nennweite |
| n2 | zweite Nennweite |
| k | Krümmungsradius |
| α | Winkel |

## Patentansprüche

1. Verfahren zur Herstellung eines Rohrformstücks (10), wobei ein metallischer Werkstoff (11) durch Erwärmen geschmolzen wird, und wobei aus dem geschmolzenen Werkstoff (11) nacheinander eine Mehrzahl an Werkstoffschichten (12) erzeugt wird, wobei die jeweils erzeugte Werkstoffschicht (12) mit der jeweils vorhergehenden Werkstoffschicht (12) stoffschlüssig verbunden wird, und wobei das Rohrformstück (10) aus den miteinander verbundenen Werkstoffschichten (12) gebildet wird, **dadurch gekennzeichnet, dass** das Rohrformstück (10) als ein Reduzierstück (100), ein Rohrbogen (110) oder eine Abzweigung (120) ausgebildet ist.

2. Verfahren nach Anspruch 1, wobei eine elektrische Spannung zwischen einer Schweißelektrode (20) und einer Gegenelektrode (21) angelegt wird, so dass ein Lichtbogen (22) zwischen der Schweißelektrode (20) und der Gegenelektrode (21) gebildet wird, wobei der Werkstoff (11) mittels der durch den Lichtbogen (22) erzeugten Wärme geschmolzen wird, und wobei mittels der durch den Lichtbogen (22) erzeugten Wärme die jeweils erzeugte Werkstoffschicht (12) mit der jeweils vorhergehenden Werkstoffschicht (12) stoffschlüssig verbunden wird.

3. Verfahren nach Anspruch 2, wobei die Schweißelektrode (20) aus dem Werkstoff (11) gebildet ist, und wobei zumindest ein Elektrodenabschnitt (23) der Schweißelektrode (20) mittels der durch den Lichtbogen (22) erzeugten Wärme geschmolzen wird, und wobei aus dem geschmolzenen Elektrodenabschnitt (23) der Schweißelektrode (20) die Mehrzahl an Werkstoffschichten (12) gebildet wird.

4. Verfahren nach Anspruch 1, wobei ein Laser- oder Elektronenstrahl (30) zur Verfügung gestellt wird, und wobei der Werkstoff (11) mittels der durch den Laser- oder Elektronenstrahl (30) erzeugten Wärme geschmolzen wird, und wobei mittels der durch den Laser- oder Elektronenstrahl (30) erzeugten Wärme die jeweils erzeugte Werkstoffschicht (12) mit der jeweils vorhergehenden Werkstoffschicht (12) stoffschlüssig verbunden wird.

5. Verfahren nach einem der Ansprüche 1 bis 4, wobei der Werkstoff in Form eines Drahtes (13) zur Verfügung gestellt wird, wobei zumindest ein Drahtabschnitt (14) des Drahtes (13) durch Erwärmen geschmolzen wird, und wobei aus dem geschmolzenen Drahtabschnitt (14) des Drahtes (13) die Mehrzahl an Werkstoffschichten (12) gebildet wird, wobei insbesondere die Schweißelektrode (20) aus dem Draht (13) gebildet ist.

6. Verfahren nach einem der Ansprüche 1 bis 4, wobei der Werkstoff (11) in Form eines Pulvers (15) zur Verfügung gestellt wird, und wobei das Pulver (15) auf die jeweils vorhergehende Werkstoffschicht (12) aufgebracht wird, und wobei das Pulver (15) durch Erwärmen geschmolzen wird, so dass die jeweilige Werkstoffschicht (12) gebildet wird und mit der jeweils vorhergehenden Werkstoffschicht (12) stoffschlüssig verbunden wird.

7. Verfahren nach einem der vorhergehenden Ansprüche, wobei der Werkstoff (11) aus der Gruppe bestehend aus Aluminium, einer Aluminiumlegierung, Nickel, einer Nickellegierung, Titan, einer Titanlegierung und Stahl ausgewählt ist.

8. Verfahren nach einem der vorhergehenden Ansprüche, wobei der Werkstoff (11) eine Aluminiumlegierung mit einem Gewichtsanteil von wenigstens 2,5 % Magnesium ist.

9. Verfahren nach einem der vorhergehenden Ansprüche, wobei das Reduzierstück (100) als ein konisches Reduzierstück (100) ausgebildet ist.

10. Verfahren nach einem der vorhergehenden Ansprüche, wobei das Rohrformstück (10) eine Druckfestigkeit von mindestens 10 bar, insbesondere mindestens 100 bar, aufweist.
